# EUROPÄISCHE PATENTSCHRIFT

(11) **EP 1 586 150 B1**
(45) Veröffentlichungstag und Bekanntmachung des Hinweises auf die Patenterteilung: **03.05.2006**
(21) Anmeldenummer: 04702653.9
(22) Anmeldetag: 16.01.2004
(51) Int. Cl.: H02B 11/26, H02B 13/035, H01C 7/12

(54) **GASISOLIERTE SCHALTANLAGE ODER KOMPONENTE EINER GASISOLIERTEN SCHALTANLAGE, MIT FREILUFTDURCHFÜHRUNG**
GAS INSULATED SWITCHING SYSTEM OR COMPONENT OF A GAS INSULATED SWITCHING SYSTEM COMPRISING AN OPEN-AIR LEADTHROUGH
INSTALLATION DE DISTRIBUTION ISOLEE PAR DU GAZ OU ELEMENTS D'UNE INSTALLATION DE DISTRIBUTION ISOLEE PAR DU GAZ, AVEC LIGNE AERIENNE

(30) Priorität: 22.01.2003 DE 10302210
(43) Veröffentlichungstag der Anmeldung: 19.10.2005
(73) Patentinhaber: ABB Technology AG, 8050 Zürich (CH)
(72) Erfinder: BRANDT, Jörn, 68167 Mannheim (DE); RIES, Christian, 64839 Münster (DE); HARDT, Niels, 93049 Regensburg (DE)
(74) Vertreter: Miller, Toivo
(86) Internationale Anmeldenummer: PCT/EP2004/000294
(87) Internationale Veröffentlichungsnummer: WO 2004/066463

(56) Entgegenhaltungen:
- EP-A- 1 030 423
- DE-C- 19 647 736

## Beschreibung

Die Erfindung bezieht sich auf eine gasisolierte Schaltanlage mit Freiluftdurchführung oder auf eine Komponente einer gasisolierten Schaltanlage mit Freiluftdurchführung gemäß dem Oberbegriff des Anspruchs 1.

Aus der DE 100 20 129 C1 ist eine Baugruppe mit Überspannungsableiter für eine Hochspannungsanlage bekannt, bestehend aus einem Isolator, der baulich mit einem aus Widerstandselementen aufgebauten Überspannungsableiter vereinigt ist. Der Isolator ist hierbei als Verbundkörper mit einem festen Korpus und einer aufgegossenen Elastomerumhüllung ausgestaltet, wobei der Überspannungsableiter in den Verguß der Elastomerumhüllung eingebettet ist.

Aus der DE 196 47 736 C1 ist ein Hochspannungs-Leistungsschalter mit einem hohlen Isolierstoffstützer bekannt, in dessen Innenraum eine Antriebsstange verläuft. Der Innenraum zwischen der Antriebsstange und der Innenwand des Isolierstoffstützers ist wenigstens teilweise mit Ableitelementen gefüllt. Beispielsweise sind ringscheibenförmige Ableitelemente vom auf Erdpotential liegenden Flansch bis hinauf zum hochspannungsseitigen Anschluß am Flansch des Leistungsschalters gestapelt. Es können auch mehrere Stapel von Ableitelementen jeweils einerseits mit dem Hochspannungspotential, andererseits mit dem Erdpotential leitend verbunden sein.

Eine gasisolierte Schaltanlage bekannter Art is auch in EP 1030423 offenbart.

Der Erfindung liegt die Aufgabe zugrunde, einen wirksamen und preiswerten Überspannungsschutz einer gasisolierte Schaltanlage mit Freiluftdurchführung oder einer Komponente einer gasisolierten Schaltanlage mit Freiluftdurchführung anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß ein separates Gestell zum Aufstellen des Überspannungsableiters eingespart wird, was zum einen Kostenvorteile (Herstellungskosten, Montagekosten) und zum anderen eine Reduktion des notwendigen Platzbedarfs zur Folge hat.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine gasisolierte Schaltanlage mit Wanddurchführung und sich anschließender Freiluftdurchführung,
- Fig. 2: eine alternative Befestigung des Überspannungsableiters.

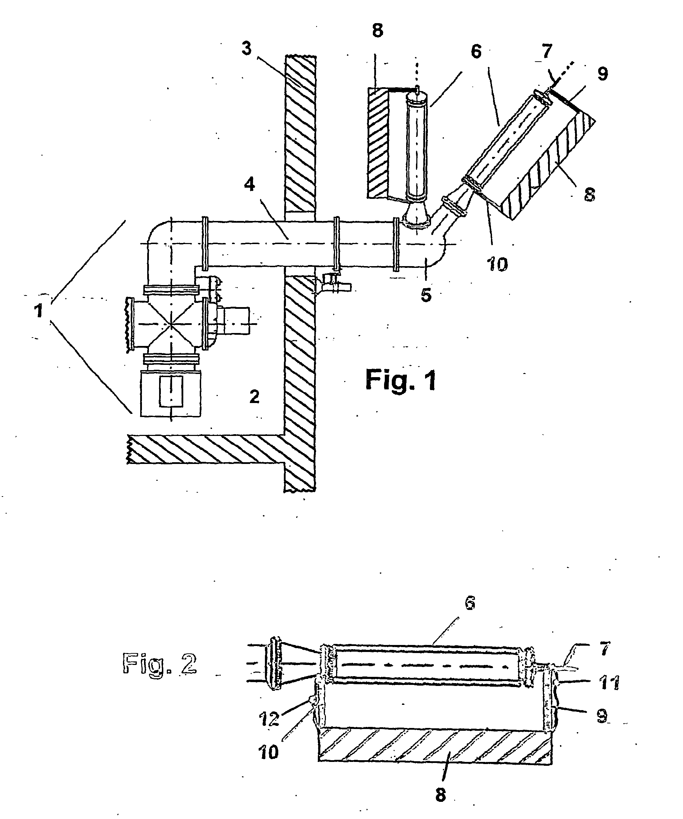

In Fig. 1 ist gasisolierte Schaltanlage mit Wanddurchführung und sich anschließender Freiluftdurchführung dargestellt. Die gasisolierte Schaltanlage 1 ist in einem Gebäude 2 aufgestellt und damit von Gebäudewänden, einem Gebäudeboden und einer Gebäudedecke umschlossen. Zum Anschluß von Betriebsmitteln im Freien, beispielsweise Transformatoren, Freileitungen und anderen Betriebsmitteln, wird eine Wanddurchführung 4 benötigt, die über eine Öffnung in einer Gebäudewand 3 vom Gebäudeinnenraum ins Freie geführt wird. Diese Wanddurchführung 4 ist in der Regel als Rohr mit auf Erdpotential liegendem metallischem Mantel ausgeführt.

Am außerhalb des Gebäudes 2 angeordnetem Fuß 5 der Wanddurchführung 4 sind je nach Anzahl der durch die Wanddurchführung 4 geführten spannungsführenden Leiter bzw. Phasen mehrere rohrförmige Freiluftdurchführungen 6 mit ihren jeweils ersten Stirnseiten (Fußteile) befestigt. Die jeweils zweiten Stirnseiten (Kopfteile) der Freiluftdurchführungen 6 werden von den innerhalb der Wanddurchführung 4 verlaufenden, Hochspannung führenden Leitern 7 durchbrochen, welche zum Anschluß von Betriebsmitteln, beispielsweise eines Transformators, oder von Freileitungen dienen.

Zum Schutz der gasisolierten Schaltanlage 1 gegen beispielsweise durch Blitzeinschlag verursachte Überspannungen ist in etwa parallel zu jeder Freiluftdurchführung 6 ein Überspannungsableiter 8 angeordnet und über ein hochspannungsseitiges Anschlußstück 9 mit dem Leiter 7 sowie über ein gehäuseseitiges Anschlußstück 10 mit dem auf Erdpotential liegenden Fuß 5 der Wanddurchführung 4 verbunden. Diese beiden Anschlußstücke 9, 10 sind mechanisch derart robust ausgebildet, daß die Überspannungsableiter 8 getragen werden. Vorzugsweise werden Metalloxid-Ableiter als Überspannungsableiter 8 eingesetzt.

Gemäß dem ersten Ausführungsbeispiel nach Fig. 1 bestehen die Anschlußstücke 9, 90 zwischen dem Leiter 7 am Kopfteil der Freiluftdurchführung 6 und dem Überspannungsableiter 8 bzw. zwischen dem Fuß 5 der Wanddurchführung 4 am Fußteil der Freituftdurchführung 6 und dem Überspannungsableiter 8 aus einem elektrisch gut leitenden Metall, so daß sie zugleich elektrische und mechanische Verbindungselemente darstellen, welche selbstverständlich derartig ausgelegt sind, daß die Wanddurchführung 4 mit Fuß 5 bzw. die Freiluftdurchführungen 6 mechanisch nicht überlastet werden.

In Fig. 2 ist eine alternative Befestigung des Überspannungsableiters dargestellt. Bei diesem zweiten Ausführungsbeispiel bestehen die Anschlußstücke 9, 10 zwischen dem Kopfteil der Freiluftdurchführung 6 und dem Überspannungsableiter 8 bzw. zwischen dem Fußteil der Freiluftdurchführung 6 und dem Überspannungsableiter 8 aus einem elektrisch schlecht oder nicht leitenden Material bzw. Metall, so daß sie lediglich mechanische Verbindungselemente darstellen. Die elektrische Verbindungen zwischen dem Leiter 7 und dem Überspannungsableitsr 8 bzw. zwischen dem Erdpotential von Wanddurchführung 4 / Fuß 5 und dem Überspannungsableiter 8 erfolgen durch separate Anschlußleiter 11 bzw. 12, welche aus starrem oder flexiblem, elektrisch gut leitendem Material gebildet sind und beispielsweise parallel zu den Anschlußstücken 9 bzw. 10 verlaufen.

Auch wenn beim vorstehend erläuterten Ausführungsbeispiel eine gasisolierte Schaltanlage mit Wanddurchführung und sich anschließender Freiluftdurchführung beschrieben wird, ist die Erfindung nicht hierauf beschränkt, sondern vielmehr auch für folgende Konfigurationen mit Vorteil anwendbar:
- Gasisolierte Schaltanlage in Freiluftaufstellung (auch bei dieser Anwendungsform werden Freituftdurchführungen verwendet, an denen die Überspannungsableiter montiert werden können, das metallene Gehäuse der gasisolierten Schaltanlage eignet sich zur Befestigung des gehäuseseitigen Anschlussstückes der Freiluftdurchführung).
- Anwendungen, welche Komponenten von gasisolierten Schaltanlagen (beispielsweise Leistungsschalter + Trennschalter in einem gasisolierten Gehäuse) zusammen mit Freiluftdurchführungen verwenden (das metallene Gehäuse der Komponente der gasisolierten Schaltanlage eignet sich zur Befestigung des gehäuseseitigen Anschlussstückes der Freiluftdurchführung). Dead Tank Breaker (Leistungsschalter in einem gasisolierten, geerdeten Metallgehäuse, das metallene Gehäuse eignet sich gut zur Befestigung des gehäuseseitigen Anschlussstückes der Freiluftdurchführung).

## Patentansprüche

1. Gasisolierte Schaltanlage (1) oder Komponente einer gasisolierten Schaltanlage, mit Freiluftdurchführung (6) zur Durchführung mindestens eines Hochspannung führenden Leiters (7), **dadurch gekennzeichnet, dass** im wesentlichen parallel zur Freiluftdurchführung (6) ein Überspannungsableiter (8) angeordnet und über ein hochspannungsseitiges Anschlußstück (9) mit dem Hochspannung führenden Leiter (7) und/oder mit dem Kopfteil der Freiluftdurchführung (6) sowie über ein gehäuseseitiges Anschlußstück (10) mit dem Fußteil der Freiluftdurchführung (6) und/oder mit dem Gehäuse der gasisolierten Schaltanlage bzw. der Komponente der gasisolierten Schaltanlage verbunden ist.

2. Gasisolierte Schattantage nach Anspruch 1, **dadurch gekennzeichnet, dass** der Überspannungsableiter (8) bei einer gasisolierten Schaltanlage (1) mit Wanddurchführung (4) und sich anschließender Freiluftdurchführung (6) über das gehäuseseitige Anschlussstück (10) alternativ mit dem Fuß (5) der Wanddurchführung (4) verbunden ist.

3. Gasisolierte Schaltanlage nach Anspruch 1 und/oder 2, **dadurch gekennzeichnet, dass** hochspannungsseitiges Anschlussstück (9) und/oder gehäuseseitiges Anschlussstück (10) aus einem elektrisch gut leitenden Metall bestehen, so daß sie zugleich elektrische und mechanische Verbindungselemente darstellen.

4. Gasisolierte Schaltanlage nach Anspruch 1 und/oder 2, **dadurch gekennzeichnet, dass** hochspannungsseitiges Anschlussstück (9) und/oder gehäuseseitiges Anschlussstück (10) aus einem elektrisch schlecht oder nicht leitenden Material bestehen, so daß sie lediglich mechanische Verbindungselemente darstellen und dass die elektrische Verbindungen zwischen dem Leiter (7) und dem Überspannungsableiter (8) sowie zwischen dem Erdpotential des Fußes (5) der Wanddurchführung (4) oder dem Gehäuse der gasisolierten Schaltanlage bzw. der Komponente der gasisolierten Schaltanlage und dem Überspannungsableiter (8) durch separate Anschlußleiter (11, 12) erfolgen, welche aus elektrisch gut leitendem Material gebildet sind.

5. Gasisolierte Schaltanlage nach Anspruch 4, **dadurch gekennzeichnet, dass** die separaten Anschlussleiter (11, 12) starr ausgebildet sind.

6. Gasisolierte Schaltanlage nach Anspruch 4, **dadurch gekennzeichnet, dass** die separaten Anschlussleiter (11, 12) flexibel ausgebildet sind.

7. Verwendung einer Anordnung gemäß einem der vorhergehenden Ansprüche bei einem Dead-Tank-Breaker.

## Claims

1. Gas-insulated switchgear assembly (1) or component of a gas-insulated switchgear assembly, having an outdoor bushing (6) through which at least one high voltage-carrying conductor (7) can be passed, **characterized in that** a surge arrester (8) is arranged essentially parallel to the outdoor bushing (6) and is connected to the high voltage-carrying conductor (7) and/or to the top part of the outdoor bushing (6) via a high voltage-side connection piece (9), and to the foot part of the outdoor bushing (6) and/or to the housing of the gas-insulated switchgear assembly or the component of the gas-insulated switchgear assembly via a housing-side connection piece (10).

2. Gas-insulated switchgear assembly according to Claim 1, **characterized in that**, in the case of a gas-insulated switchgear assembly (1) having a wall bushing (4) and an adjoining outdoor bushing (6), the surge arrester (8) is alternatively connected to the foot (5) of the wall bushing (4) via the housing-side connection piece (10).

3. Gas-insulated switchgear assembly according to Claim 1 and/or 2, .**characterized in that** the high voltage-side connection piece (9) and/or the housing-side connection piece (10) are made of an electrically highly conductive metal, with the result that they are at the same time electrical and mechanical connecting elements.

4. Gas-insulated switchgear assembly according to Claim 1 and/or 2, **characterized in that** the high voltage-side connection piece (9) and/or housing-side connection piece (10) are made of an electrically poorly conductive or nonconductive material, with the result that they are only mechanical connecting elements, and **in that** the electrical connections between the conductor (7) and the surge arrester (8) and between the earth potential of the foot (5) of the wall bushing (4) or the housing of the gas-insulated switchgear assembly or the component of the gas insulated switchgear assembly and the surge arrester (8) take place using separate connecting conductors (11, 12) which are formed from an electrically highly conductive material.

5. Gas-insulated switchgear assembly according to Claim 4, **characterized in that** the separate connecting conductors (11, 12) are designed to be rigid.

6. Gas-insulated switchgear assembly according to Claim 4, **characterized in that** the separate connecting conductors (11, 12) are designed to be flexible.

7. Use of an arrangement according to one of the preceding claims in a dead tank breaker.

## Revendications

1. Installation de distribution à isolation gazeuse (1) ou composant d'une installation de distribution à isolation gazeuse, comprenant une traversée en plein air (6) pour le passage d'au moins un conducteur (7) conduisant une haute tension, **caractérisée par le fait qu'**un dérivateur de surtension (8) est disposé de façon sensiblement parallèle à la traversée en plein air (6) et est relié par l'intermédiaire d'une pièce de connexion (9), située côté haute tension, au conducteur (7) conduisant la haute tension et/ou à la partie de tête de la traversée en plein air (6) et est relié par l'intermédiaire d'une pièce de connexion (10), située côté boîtier, à la partie de pied de la traversée en plein air (6) et/ou au boîtier de l'installation de distribution à isolation gazeuse ou du composant de l'installation de distribution à isolation gazeuse.

2. Installation de distribution à isolation gazeuse selon la revendication 1, **caractérisée par le fait que** le dérivateur de surtension (8) pour une installation de distribution à isolation gazeuse (1), comportant une traversée murale (4) et, à la suite de celle-ci, une traversée en plein air (6), est relié de manière alternative au pied (5) de la traversée murale (4), par l'intermédiaire de la pièce de connexion (10) située côté boîtier.

3. Installation de distribution à isolation gazeuse selon la revendication 1 et/ou 2, **caractérisée par le fait que** la pièce de connexion (9) côté haute tension et/ou la pièce de connexion (10) côté boîtier sont réalisées à partir d'un métal bon conducteur de l'électricité, de sorte qu'elles constituent des éléments de liaison aussi bien sur le plan électrique que sur le plan mécanique.

4. Installation de distribution à isolation gazeuse selon la revendication 1 et/ou 2, **caractérisée par le fait que** la pièce de connexion (9) côté haute tension et/ou la pièce de connexion (10) côté boîtier sont réalisées à partir d'un matériau mauvais conducteur ou non conducteur de l'électricité, de sorte qu'elles constituent seulement des éléments de liaison mécaniques, et **par le fait que** les liaisons électriques entre le conducteur (7) et le dérivateur de surtension (8) et entre le potentiel terrestre du pied (5) de la traversée murale (4) ou le boîtier de l'installation de distribution à isolation gazeuse ou le composant de l'installation de distribution à isolation gazeuse et le dérivateur de surtension (8) sont établies par des conducteurs de connexion (11, 12) séparés qui sont constitués d'un matériau bon conducteur électrique.

5. Installation de distribution à isolation gazeuse selon la revendication 4, **caractérisée par le fait que** les conducteurs de connexion (11, 12) séparés sont rigides.

6. Installation de distribution à isolation gazeuse selon la revendication 4, **caractérisée par le fait que** les conducteurs de connexion (11, 12) sont flexibles.

7. Utilisation d'un agencement selon une des revendications précédentes dans un disjoncteur de type "dead tank breaker".
